# EUROPEAN PATENT APPLICATION

(11) **EP 4 827 012 A1**
(43) Date of publication of application: **21.10.2026**
(21) Application number: 26172167.4
(22) Date of filing: 14.04.2026
(51) Int. Cl.: H04B 7/185, H04L 41/16

(54) **METHOD FOR A RESOURCE CONTROL SYSTEM**

(30) Priority: 16.04.2025 US 202563789682 P
(71) Applicant: SES Americom, Inc, Princeton, NJ 08540 (US)
(72) Inventor: Chamarti, Aravind, Brambleton, VA, 42622 (US)
(74) Representative: Vossius & Partner Patentanwälte Rechtsanwälte mbB

(57) **Abstract**

The present invention generally relates to a method for a resource control system. Herein, the method comprises obtaining current system configuration data, obtaining system constraint data indicating at least one constraint of the satellite communication system, obtaining a base machine learning model trained based on at least one of predetermined system configuration data and historic system configuration data, applying based on a change affecting the satellite communication system a system configuration placeholder to the current system configuration data, and generating, with the base machine learning model, based on the current system configuration data with the applied system configuration placeholder, a generated system configuration data comprising at least one generated configuration parameter regarding the satellite communication system and indicating a subsequent configuration of the satellite communication system for handling the change in compliance with the system constraint data.

## Description

### TECHNICAL FIELD

The present invention generally relates to a method for a resource control system. More specifically, the invention relates to a method for handling changes in a satellite communication system by a resource control system of said satellite communication system.

### BACKGROUND

### State of the Art

Satellite communication systems comprise several resources that need to be coordinated in order to provide a communication service meeting requirements of end users. To this end, there are known techniques for scheduling or controlling satellites of such a system.

US 2022/0 158 719 A1 relates to measures for managing satellite bearer resources of a satellite communications network. Herein, a resource management agent is fed input from a machine learning algorithm in order to instruct the satellite control. However, bearer allocation i.e., allocating a resource on the time-frequency-plane, omits a significant number of parameters necessary for controlling the satellite. Additionally, these measures do not take into account further resources of the satellite communication system such as gateways and terminals for example.

US 2024/0 022 317 A1 relates to a method of operating a satellite in a non-terrestrial network. Herein, a satellite may be controlled to generate cells formed by each of beams akin to a terrestrial (cellular) network.

### Technical Problem

The coordination of a communication system comprising satellites, gateways, terminals and other constituent resources is more complex than managing a single satellite. Specifically, change generation and management is cumbersome since it impacts a multitude of these resources and a plurality of terminals and directly impacts the quality of service and the associated customer experience in real time. For example, adjusting multiple parameters such as the beam energy, frequency and the location as well as choice of resources simultaneously becomes a complex technical challenge, especially since a service interruption or a reduction in quality of service must be avoided. Provisioning multi-orbit resources adds another order of complexity since they introduce further interdependencies and cause time delays when updating their configurations, making system resource control i.e., the orchestration of the resources prone to errors.

Especially when a user's requirement changes and the satellite communication system needs to be reconfigured to accommodate the change, due to the significant number of entities constituting said satellite communication system, the number of control parameters available for each entity of said satellite communication system, and the capability constraints imposed by each entity of said satellite communication system, the reconfiguring involves complexity resulting in high computational burden.

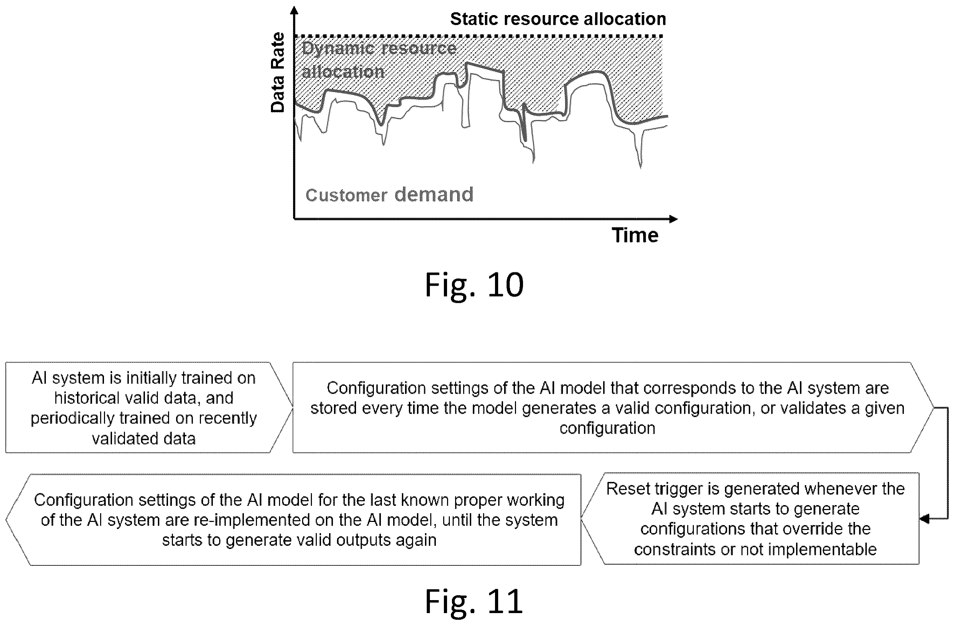

Moreover, adaptive resource control (ARC) may control the satellite communication system/domain, wherein the main objective of ARC may be to optimize the available flexibility of satellite resources by adapting in real-time to traffic demands and coordinating the resources of the satellite communication system to support the adapted traffic demand. Fig. 10 illustrates an example of providing a dynamic resource allocation of vs static resource allocation. Herein, the shaded area represents a gain or saving since fewer systems, sub-systems and/or resources need to be deployed to meet the traffic demand. Using the prior art approaches discussed above would require a significant amount of computation to update, validate and deploy any system configuration in response to a changed requirement.

Therefore, there is a need to provide a method capable of orchestrating and coordinating the resource allocation and control of a plurality of entities constituting a satellite communication system. A particular aim is to provide a method capable of handling changes of the satellite communication system in a robust and efficient manner, ensuring that a reconfiguration of the satellite communication system results in both meeting the changed user requirements and avoiding an operation of entities constituting the satellite communication system outside their operation constraints.

### Solution to the Technical Problem

The subject-matter of the independent claims solves the technical problem. The dependent claims describe further specific embodiments, and this description explains how the present invention may for example be carried out.

### BRIEF DESCRIPTION OF DRAWINGS

Fig. 1 illustrates a method according to an embodiment of the present invention.
Fig. 2 illustrates an example for handling a plurality of change requests.
Fig. 3 illustrates details regarding an AI sub-system and AI (main) system.
Fig. 4 illustrates an example for handling a plurality of addition or deletions of sub-systems to the (main) system.
Fig. 5 illustrates details regarding an AI sub-system and AI (main) system.
Fig. 6 illustrates a system suitable for the method according to an embodiment of the present invention.
Fig. 7 illustrates an example of current system configuration data as an image card.
Fig. 8 illustrates an example of a current entity configuration data as an image card.
Fig. 9 illustrates an example modification of the embodiment of the present invention.
Fig. 10 illustrates an example to visualize benefits of using dynamic resource allocation over static resource allocation.
Fig. 11 illustrates an example of resetting weights when evolving the machine learning model.

### DETAILED DESCRIPTION

The following detailed description explains embodiments of the present invention in reference to the provided drawings. It is provided to enable a person skilled in the art to carry out, make and use the present invention. The description includes details, embodiments, examples, and explanations intended to provide an understanding of the present invention. However, the specific terms used herein are for illustrative purposes only and do not intend to limit the scope of the set of claims or the present invention as defined by the set of claims.

Throughout this description, terms not designated by reference signs may be used or interpreted interchangeably and their literal meaning does not limit the scope of the present invention as defined by the enclosed terms.

Throughout this description, terms not designated by reference signs may be used or interpreted interchangeably and their literal meaning does not limit the scope of the present invention as defined by the enclosed terms.

E.g., general terms such as "comprising", "including", "containing", and "having" may be used interchangeably, terms such as "device", "system", "apparatus", "entity", and "unit" may be used and interpreted interchangeably, and terms such as "configured to", "adapted to", "designed to", and "for" may be used and interpreted interchangeably.

Further, certain terms may be referred to by a shorthand rather than the full wording of the term. E.g., the term "satellite communication system" may also be referred to as "system", the "communication entity" may also be referred to as "entity" or "sub-system", the "system simulation" and "entity simulation" may be referred to as "simulation" only. Further, the term "machine learning model" may be referred to in general rather than a specific machine learning model. Further, the terms "base machine learning model", "system base machine learning model", "evolved machine learning model", "system evolved machine learning model", "AI system", and "main AI system" may be used interchangeably. Further, the terms "base machine learning model", "entity base machine learning model", "evolved machine learning model", "entity evolved machine learning model", and "AI sub-system" may be used interchangeably.

After all, the context of this reference makes clear which term is referred to. Where a clear differentiation between terms is essential for understanding the present invention, the full wording is used rather than the shortened term.

The invention generally relates to the field of handling changes in a satellite communication system, for examples by a resource control system for a satellite communication system.

Simulating orchestration parameters of said resources in parallel to the current system operation relieves some of the pressure from the development deadlines and allows modular natural evolution of the simulator. By parallelly training the simulator with the operational orchestration system data, the simulator system becomes more accurate. By keeping the simulator system modular, individual sub-systems can be trained in parallel and independently to the satisfaction of the orchestration process owners. The proposed simulator system may also have safety mechanisms to avoid over-training, hallucinations and generating biased data. Such a fallback mechanism may be to revert to a known compliant version.

Such simulation system may become the primary system of orchestration in the future, with another AI system with a different AI model as a simulator as well.

### DESCRIPTION OF EMBODIMENTS

### Embodiment

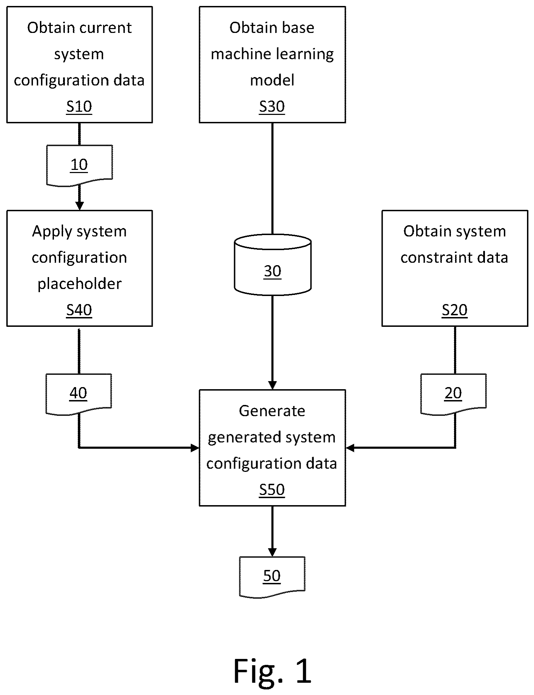

Fig. 1 illustrates a method according to an embodiment of the present invention.

In the following, a (first) method for a resource control system and assisting in handling of changes affecting a satellite communication system comprising a plurality of communication entities is described.

Herein, the method may be performed by a orchestration system (which may be an example of a resource control system) that may include an event simulator configured to ingest online information of happening/impeding natural/human-made events/changes regarding a (potential) disruption of the satellite communication network. The event simulator may further be configured to project capacity requirements regarding at least one of a plurality of communication entities of the satellite communication system. This projection may be with regard to at least one of:
i) one or more deployed communication entities (e.g., satellites in orbit, operational gateways etc.);
ii) one or more deployable communication entities (e.g., standby resources or subscribed emergency response satellite links); and
iii) on-demand satellite link subscriptions.

The orchestration system may further include a resource allocation simulator configured to generate a delivery plan parameters (or generated system configuration data as described below) while (optionally) optimizing the satellite communication (SATCOM) resources.

The orchestration system may further include a resource allocation validator configured to compare the delivery plan parameters to at least one of a production-level operation and a non-ai delivery plan, and estimate if the simulated values result in an improvement of the operation of the satellite communication system.

Herein, the orchestration system may be configured to ingest (e.g., through its sub-systems indicated above):
1. one or more dynamic inputs such as current traffic on user terminals, their committed information rate, burst-ability configuration, multi-orbit accessibility, performance SLAs; projected new location of mobile terminals, and
2. one or more constant inputs such as space craft power, its spectrum availability, frequency reuse-mapping, regulatory constraints, beam-level capacity requirements, deployed terminal inventory, their status, contention criteria and capabilities, gateways & their platform.

The resource control system may be a computer, system of computers or other device capable of performing at least some of the steps disclosed herein. A purpose of the resource control system is to control resources constituting the satellite communication system.

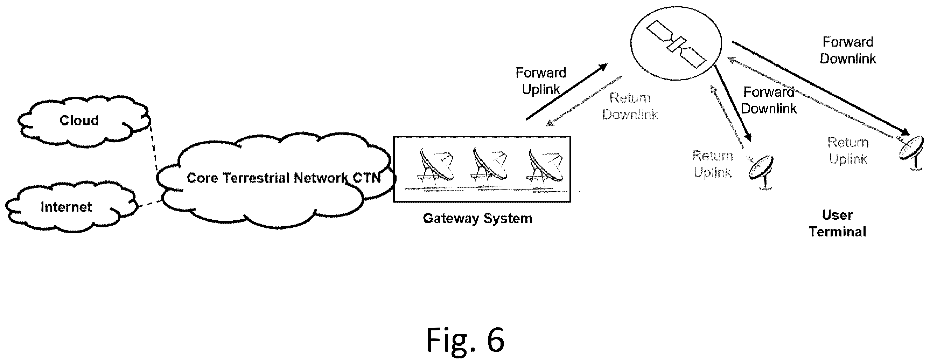

Fig. 6 illustrates a satellite communication system suitable for the method according to an embodiment of the present invention.

The satellite communication system is a term for a communication system in general and needs not be exclusively linked to a communication using satellites. The satellite communication system may be any kind of communication system constituted by a plurality of networking entities, also referred to as constituting resources, sub-systems or communication entities. Herein, the plurality of communication entities may comprise at least one of a gateway (GW), a satellite, a terminal and a communication link, and a terrestrial network component, to facilitate a communication link from the terminal to a network like the Internet. For example, as illustrated in Fig. 6, the satellite communication system may comprise at least one of: one or more network side transceivers, one or more satellites, one or more terminal side transceivers, and network equipment. Although illustrated only on the network side in Fig. 6, the network equipment may be a gateway, router, switch, cable, fiber or similar terrestrial networking equipment on either the network side, the terminal side or on both sides. The communication entities or resources constituting the satellite communication system may also be referred to as sub-systems, wherein the satellite communication system is the system.

The change may also be referred to as a disruptive event, and may be associated with at least one of:
a) a normal event such as adding a further one of the resources mentioned above, changing a configuration of at least one currently provisioned resource, or removing an existing resource, for example due to contract expiration or reaching its end of life, and
b) a disruptive event like an unexpected failure of a resource (for example a breakout of a fiber link to an island) wherein the unexpected failure may trigger at least one stand-by resource to become active (in this example a backup link) to keep the satellite communication system in a working order.

According to this embodiment, the method comprises obtaining S10 current system configuration data 10 comprising at least one current configuration parameter regarding the satellite communication system and indicating a current configuration of the satellite communication system.

The obtaining may involve reading, requesting, fetching or loading of data from a data source (not illustrated) holding or storing data representing the current configuration of the satellite communication system. Also or alternatively, the obtaining may involve querying, requesting, interacting or communicating with one or more communication entities to obtain the current configuration of said one or more communication entities to derive therefrom the current configuration of the satellite communication system. In the latter case, the current configuration of not every communication entity needs to be obtained. For example, if a current system configuration data 10 has been obtained from a data store, parts of this obtained current system configuration data 10 may be updated based on one or more predetermined communication entities.

The current configuration may refer to at least one current state or at least one current value of a communication entity such as an encoding scheme, a beam configuration, a frequency, a power, a voltage, an orientation, an orbit, a polarization etc. Also or alternatively, the current configuration may refer to a summarizing state of one or more entities such as a low power operation mode, a low latency operation mode, a standby operation mode, etc.

Herein the current system configuration data may be a set or an array comprising a plurality of current entries, each current entry regarding one current configuration parameter.

The current system configuration data 10 may be a file or a data structure holdable in computer memory. The current system configuration data 10 may be represented by an image or an image card wherein individual pixels represent a parameter corresponding to the system and/or at least one communication entity of the system. More detail for this latter configuration is explained with regard to the training and operating of the (base or evolved) machine learning model further below. Herein the current system configuration data may indicate at least one of an identification, a type, a bandwidth, a throughput, an encoding scheme, a beam configuration, and a constraint regarding at least one of the plurality of communication entities.

The method further comprises obtaining S20 system constraint data 20 indicating at least one constraint of the satellite communication system, the at least one constraint of the satellite communication system being hereon referred to as "system constraints set".

The constraint data 20 may refer to at least one constraint of the satellite communication system and/or of at least one entity of the satellite communication system such as maximum data throughput, available encoding/decoding schemes, set/indication of configurable frequencies/frequency bands, maximum/minimum operation duration, etc. The constraint data 20 may be a file or a data structure holdable in computer memory. With regard to the current system configuration data 10, the constraint data 20 may also represented by one or more images or one or more image cards indicating limits of one or more ranges of possible values for each pixel, wherein individual pixels represent a parameter corresponding to the system and/or at least one communication entity of the system.

The method further comprises obtaining S30 a base machine learning model 30 trained based on training data.

The obtaining may involve reading, requesting, fetching or loading of data from a data source (not illustrated) holding or storing data representing the base machine learning model 30. The base machine learning model 30 may be a machine learning model for image generation. Specifically, the base machine learning model 30 may be at least one of a neural network, a deep neural network, a generative adversarial network, a variational autoencoder, and a diffusion model.

The training data may be based on at least one of:
a) predetermined system configuration data comprising at least one predetermined configuration parameter regarding the satellite communication system and indicating a predetermined configuration of the satellite communication system, and
b) historic system configuration data comprising at least one historic configuration parameter regarding the satellite communication system and indicating a historic configuration of the satellite communication system.

Details on how to obtain the predetermined system configuration data and/or the historic system configuration data is described below.

The training data may be of any format suitable for training a machine learning model. Herein, a set of training data may be divided into training inputs and target/training outputs, wherein weights of the machine learning model may be changed based on an error/difference between the outputs generated by the machine learning model and the target/training outputs. Which part of the training data is chosen as training input and which part of the training data is chosen as target/training output may be arbitrary. Once the error/difference reaches or falls below a predetermined threshold, the training of the base machine learning model 30 is deemed to be completed.

The method further comprises applying S40, based on a change affecting the satellite communication system, a system configuration placeholder to the current system configuration data.

The change may be a disruptive event as described above.

The system configuration placeholder may be an indicator for the base machine learning model 30 indicating which parameters of the current system configuration data 10 need to be (re-) generated. Herein, applying the system configuration placeholder may also include changing at least one parameter of the current system configuration data 10 to indicate the change to the base machine learning model 30.

Herein the system configuration placeholder may be at least one further entry addable to current system configuration data 10, wherein the at least one further entry regards one current configuration parameter or one generated configuration parameter and may be: an empty value, a predetermined value or a random value.

In this regard, applying the system configuration placeholder may comprise at least one of:
a) concatenating at least one of the plurality of entries of the current system configuration data and the at least one further entry of the system configuration placeholder, and
b) substituting at least one of the plurality of entries of the current system configuration data with the at least one further entry of the system configuration placeholder.

In Fig. 1, the current system configuration data 10 with the applied system configuration placeholder is designated as reference sign 40.

The method further comprises generating S50, with the base machine learning model 30, based on the current system configuration data (10) 40 with the applied system configuration placeholder, a generated system configuration data 50 comprising at least one generated configuration parameter regarding the satellite communication system and indicating a subsequent configuration of the satellite communication system for handling the change in compliance with the system constraint data 20.

The generated system configuration data 50 may be of the same structure as the current system configuration data 40 with the applied system configuration placeholder, only that the base machine learning model 30 substituted for the system configuration placeholder values as parameters for entities of the satellite communication system. Put differently, the base machine learning model 30 may use values of this current system configuration data 40 as input and generate values for filling in the system configuration placeholder as output. Thereby, a collection of configurations for the satellite communication system may be obtained based on a change affecting the satellite communication system.

Herein the generated system configuration data may be a set or an array comprising a plurality of generated entries, each generated entry regarding one generated configuration parameter.

That is to say, generating the generated system configuration data 50 may comprise determining a value for the system configuration placeholder by applying to the base machine learning model the current system configuration data (10) 40 with the applied system configuration placeholder.

Further, the at least one of the current system configuration data 10, and the generated system configuration data may relate to a beam configuration, a gateway choice, a codec, a satellite choice, a bandwidth, a frequency, an encoding scheme, a decoding scheme, a polarization and a communication protocol. The same may mutually apply to the evolved system generation data which is described later.

Compliance with the system constraint data 20 may be assured by suitably training the base machine learning model (as described below), and/or by operating simulations (as described below). That is to say, the base machine learning model may be trained to generate generated system configuration data 50 that is in compliance with the system constraint data 20. If the base machine learning model is of a type not trainable to generate generated system configuration data 50 that is in compliance with the system constraint data 20, a separate system (or entity) simulation (which is described below) may be used to validate compliance.

Although the above description of an embodiment of the present invention makes use of a base machine learning model 30 trained based on training data regarding the satellite communication system, the present invention is not limited thereto. That is to say, the base machine learning model may be trained based on training data regarding at least one of the satellite communication system and one of the plurality of communication entities, to which a change has been or will be applied. As a result, generated entity configuration data i.e., focusing on said one communication entity, may be generated first based on the change. As a subsequent step, this generated entity configuration data may be used by the same or a differently trained machine learning model to generate the generated system configuration data based on said entity configuration data and the change.

Specifically, a further embodiment of the present invention may be a (second) method for a resource control system and assisting in handling of at least one change affecting a satellite communication system comprising a plurality of communication entities, wherein the method comprises: obtaining S10 current entity configuration data comprising at least one current configuration parameter regarding at least one of the plurality of communication entities and indicating a current configuration of the at least one communication entity; obtaining S20 entity constraint data 20 indicating at least one constraint of the at least one communication entity, the at least one constraint of the at least one communication entity being hereon referred to as "entity constraints set"; obtaining S30 an entity base machine learning model 30 trained based on entity training data; applying S40, based on a change affecting the satellite communication system, an entity configuration placeholder to the current entity configuration data; and generating S50, with the entity base machine learning model 30, based on the current entity configuration data 10, 40 with the applied entity configuration placeholder, a generated entity configuration data 50 comprising at least one generated configuration parameter regarding the at least one communication entity and indicating a subsequent configuration of the at least one communication entity for handling the change in compliance with the system constraint data 20.

Herein, the entity training data may be based on at least one of:
- predetermined entity configuration data comprising at least one predetermined configuration parameter regarding the at least one communication entity and indicating a predetermined configuration of the at least one communication entity, and
- historic entity configuration data comprising at least one historic configuration parameter regarding the at least one communication entity and indicating a historic configuration of the at least one communication entity;

Because the disclosure regarding the generation of the generated system configuration data according to the (first) method explained further above mutually applies for generating the generated entity communication data according to this (second) method, a repetition of the above is omitted.

Further the (second) method may comprise the steps pertaining to generating the system configuration data wherein the step of generating S50 is based on both the generated entity configuration data mentioned above as well as the change.

Specifically, the (second) method may comprise: obtaining S10 current system configuration data 10 comprising at least one current configuration parameter regarding the satellite communication system and indicating a current configuration of the satellite communication system; obtaining S20 system constraint data 20 indicating at least one constraint of the satellite communication system, the at least one constraint of the satellite communication system being hereon referred to as "system constraints set"; obtaining S30 a system base machine learning model 30 trained based on system training data; applying S40, based on the change affecting the satellite communication system and on the generated entity configuration data, a system configuration placeholder to the current system configuration; and generating S50, with the system base machine learning model 30, based on the current system configuration data 10, 40 with the applied system configuration placeholder, a generated system configuration data 50 comprising at least one generated configuration parameter regarding the satellite communication system and indicating a subsequent configuration of the satellite communication system for handling the change in compliance with the system constraint data 20.

Herein, the system training data may be based on the same predetermined/historic system configuration data as the (more general) training data explained above i.e., it may be based on at least one of:
- predetermined system configuration data comprising at least one predetermined configuration parameter regarding the satellite communication system and indicating a predetermined configuration of the satellite communication system, and
- historic system configuration data comprising at least one historic configuration parameter regarding the satellite communication system and indicating a historic configuration of the satellite communication system;

The system training data may (additionally) comprise the entity training data.

Because the disclosure regarding the generation of the generated system configuration data according to the (first) method explained further above mutually applies for generating the generated system communication data according to this (second) method, a repetition of the above is omitted.

### Modification to Embodiment

The present embodiment has been described in general terms above. Without imposing a limit on the scope of the present invention and for better understanding the present invention only, an exemplifying modification of this embodiment is explained in the following section.

In this modification, reference is made to using images or image cards which is an example of the data mentioned above. This example has been chosen, because images can be illustrated in the drawings, and because state of the art machine learning models for generating images have become efficient at using compute resources. Therefore, when using images or image cards to update the system configuration data, an fast and efficient compute can be achieved, thereby allowing real-time adaptive resource control (ARC) as discussed above.

An image or image card may represent a current entity configuration data of one communication entity or a current system configuration data of the satellite communication system. Therefore, the image or image card may comprise a plurality of pixels, wherein each unique parameter representing a configuration is pixelated such that variations of color (or shade) of one pixel represent different values of the same parameter. So called empty pixels (e.g., of a predetermined color or shade like white, black or having a predetermined alpha value) may be included to allow space for future parameters. Although the coloring (or shading) and size of the images or image cards as illustrated in the figures may appear to follow a certain scheme, the present invention is not limited thereto, and the number, coloring, shading and order of pixels representing parameters may be arbitrarily chosen.

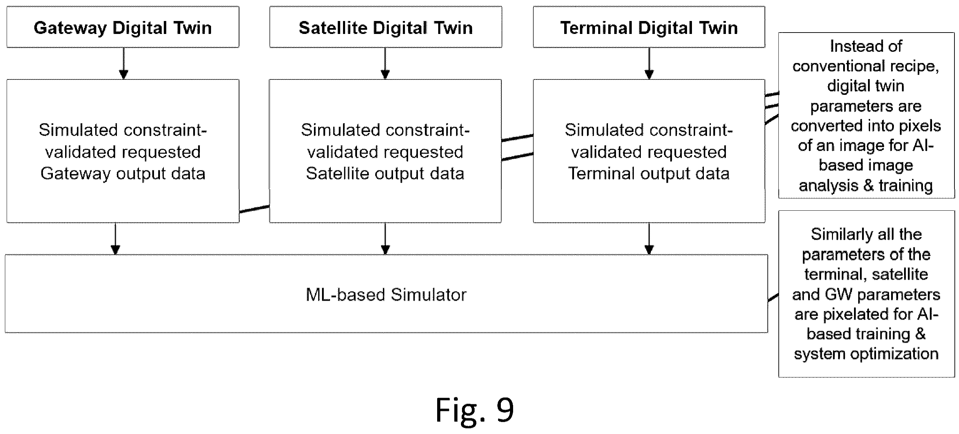

As illustrated in Fig. 9, the digital twin representation of one or more communication entities e.g., a gateway, a satellite and a terminal, may be provided to a machine learning model (the three middle blocks in Fig. 9). The machine learning model may be configured to output configuration data for the corresponding communication entity. Herein, because the machine learning model may be trained to produce outputs compliant with the system/entity constraints set (such training is described below), the outputs may also be referred to as simulated constraint-validated data.

These outputs may then be provided to a simulator that may be configured to obtain an image card representing the generated system configuration data as outlined above.

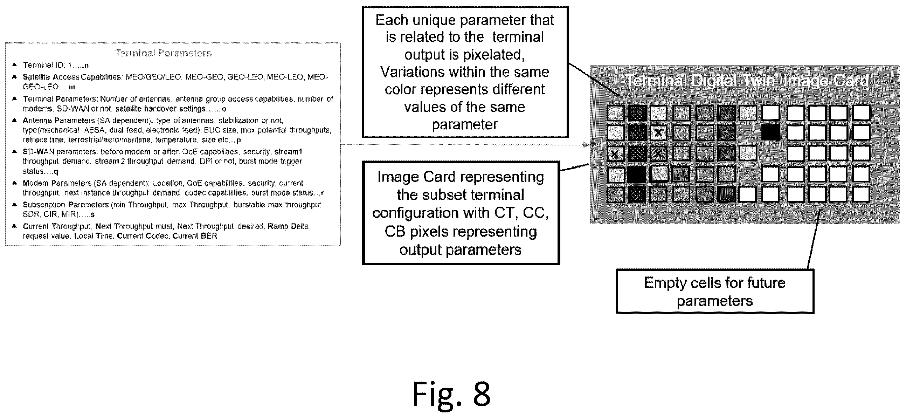

Regarding the digital twin representation of a communication entity, Fig. 8 illustrates how such a digital twin may be obtained for a terminal (being an example of one communication entity). Herein terminal parameters may be mapped to pixels of an image card, such that color (or shade in case of gray-scale images) contains information regarding said terminal parameters. As a result, each unique parameter that is related to the communication entity's output may be pixelated, and variations within the same color (or shade) may represent different values of the same parameter.

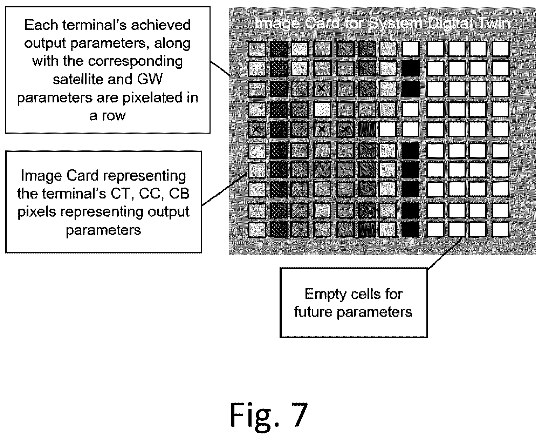

Similarly, Fig. 7 illustrates an example of a digital twin representation of the satellite communication system. Herein, each communication entity's (e.g., terminal's) output parameters, along with corresponding satellite and gateway (GW) parameters may be pixelated in a row.

The system simulator (e.g., a machine learning model as described above) may be tasked to generate system image cards based on the required values of the output parameters. In Fig. 7A examples of output parameters are indicated by dotted blocks. Each output parameter of the individual communication entity may be the product of the desired output parameters and a priority factor e.g., representing the quality of service, SLA, burst mode trigger, disruption simulation need of the communication entity etc. As described in more detail below, each successive simulated/generated image card may be used to train the machine learning model after actual physical implementation and validation.

As a result, a modification of the method according to this embodiment may comprise:
- obtaining one or more digital twin representations of communication entities of a satellite communication system;
- marking, based on a change affecting the satellite communication system, one or more parameter representations of the one or more digital twin representations;
- providing to a machine learning model trained based on training data (e.g., as disclosed in this description); and
- obtaining, with the machine learning model, a subsequent digital twin representation compliant with system/entity constraints, wherein the machine learning model generates updated values for the marked one or more parameter representations.

Herein, the change may be reflected in at least one configuration parameter of at least one of the (deployed) communication entities. As a result, by indicating to the machine learning model, which parameters require updating (e.g., by marking pixels as being changeable), the machine learning model may generate updated values for these parameters and generate constraint-validated data indicating (e.g., through the pixel values of the image card) the configuration parameters for the communication entity to handle the change.

Herein, the marking may be an example of the placeholder mentioned above.

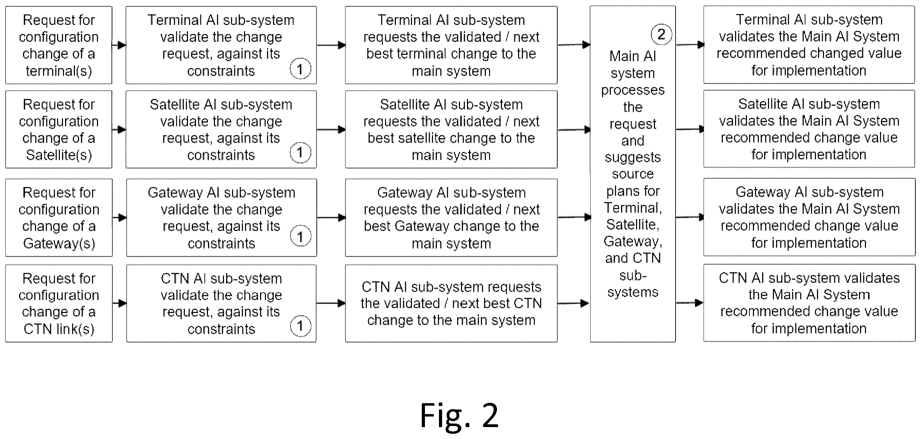

For example, Fig. 2 illustrates an example where a plurality of requests for configuration change may be provided. Although Fig. 2 illustrates four requests for reconfiguration change, the present invention is not limited thereto.

Herein, each request for configuration change may be represented by a changed pixel value in the image card or may be represented by marking a pixel value as a pixel value to be changed in order to handle the request for configuration change. In either case, the description for one case mutually applies to the other case.

Assuming the former case that the pixel values have been changed, the corresponding image card may be provided to the machine learning model. Herein, the machine learning model may be generally trained or specifically trained, wherein:
- a generally trained machine learning model may be configured to output constraint-validated data regardless of which communication entity the input data originated from, and
- a specifically trained machine learning model may be configured to output constraint-validated data specific to a predetermined communication entity, a predetermined type of communication entity, and/or a predetermined group of communication entities.

Herein, the machine learning model for a communication entity may also be referred to as an AI sub-system.

The machine learning model may validate the change request against the constraints of the communication entity and may output the validated (or next best) communication equipment change (see number 1 in Fig. 2). This output may be the subsequently generated image card mentioned above.

This output may be provided to a machine learning model that may be configured to generate an output (or system output) for planning deployment of the communication entities of the satellite communication system (see number 2 in Fig. 2). This machine learning model may be referred to as a (main) AI system, and the (system) output may be the system image card mentioned above. When generating this (system) output the machine learning model may confirm compliance with the system constraints and requirements.

Herein, the used machine learning models (i.e., in the steps of numbers 1 and 2 of Fig. 2) may be the same model (e.g., a generally trained model) or may be different models (e.g., specifically trained models).

From this (system) output configuration (e.g., the image card of the satellite communication system), the parameters for the communication entities may be derived, (optionally) validated by machine learning model for the communication entity (e.g., by the AI sub-system) and the corresponding communication entity may be updated according to the derived parameters.

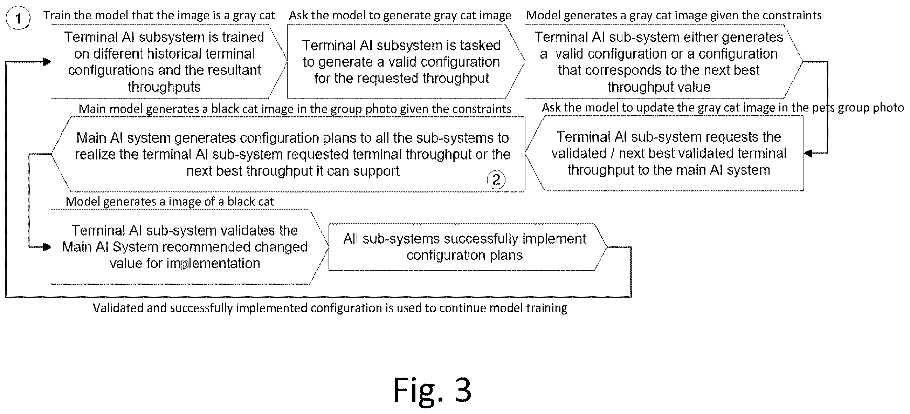

Fig. 3 illustrates an example procedure for handling the requests for configuration change as illustrated in Fig. 2. This process is explained for illustrative purpose only, and a parallel is drawn to conventional image generation for better understanding of each step.

Herein, as a first step, the machine learning model for the communication entity (i.e., the AI sub-system) may be trained on different predetermined or historic communication entity configuration data (i.e., entity image cards for training) and predetermined target parameters. In the example of Fig. 3, the communication entity is a terminal, and the target parameter is throughput. This step may be akin to training an image generation model to learn that the object in an image is a gray cat.

As a next step, the machine learning model may generate a compliance-validated configuration for the requested target parameter. This step may be akin to asking the trained image generation model to generate an image of a gray cat.

As a next step, the machine learning model may generate a compliance-validated configuration or a configuration wherein the target parameter is closest to a requested value of the target parameter (i.e., the generated entity image card). This step may be akin to generating an image of a gray cat given certain constraints (e.g., the cat must not be white or must be darker than gray).

As a next step, the machine learning model may provide the thus generated configuration to the machine learning model for the satellite communication system (i.e., the (main) AI system). This step may be akin to mapping or updating the generated image of a gray cat to/in an image of a group of pets.

As a next step, the machine learning model may generate a configuration plan (i.e., the system image card) regarding its constituting communication entities that is either constraint-validated or is generated with the target parameters being closest to requested values of the target parameters. This step may be akin to an image generation model generating an image of a black cat in an image of a group of pets given certain constraints (e.g., the cat must not be white or must be darker than gray).

Finally, as a next step, the machine learning model may divide the configuration plan (i.e., the system image card) into configurations for the communication entities (i.e., the entity image cards) and apply the configurations to the communication entities.

Optionally, the validated and successfully implemented configuration may be fed back to the training step, to obtain the system/entity evolved machine learning model (which is explained below.

In this example, the "cat" referred to in parallel, may be the configuration parameter e.g., throughput, the main image generation model may be the (main) AI system trained, and cat image generation model may be the AI sub-system.

Although a modification has been explained that makes use of both a machine learning model for the communication entities (i.e., the AI sub-system) and a machine learning model for the satellite communication system (i.e., the (main) AI system), the present invention is not limited thereto. That is to say, as a further modification, the request for configuration change may be provided directly to the machine learning model for the satellite communication system (i.e., the (main) AI system). For example, if the request for configuration change involves a communication entity being added or removed, it may not be feasible to generate a blank image card or not generate an image card at all to cover these scenarios. Also in a case where the change may be applied to the image card of the satellite communication system, steps involving a machine learning model for the communication entities may be omitted to reduce the amount of computation.

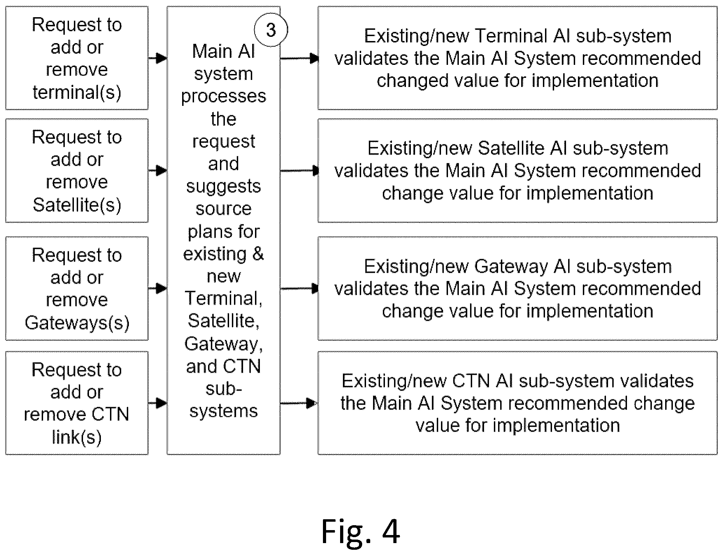

In this regard, Fig. 4 illustrates an example, wherein requests for addition/removal of communication entities are provided to the machine learning model of the satellite communication system (i.e., number 3 in Fig. 4; the (main) AI system).

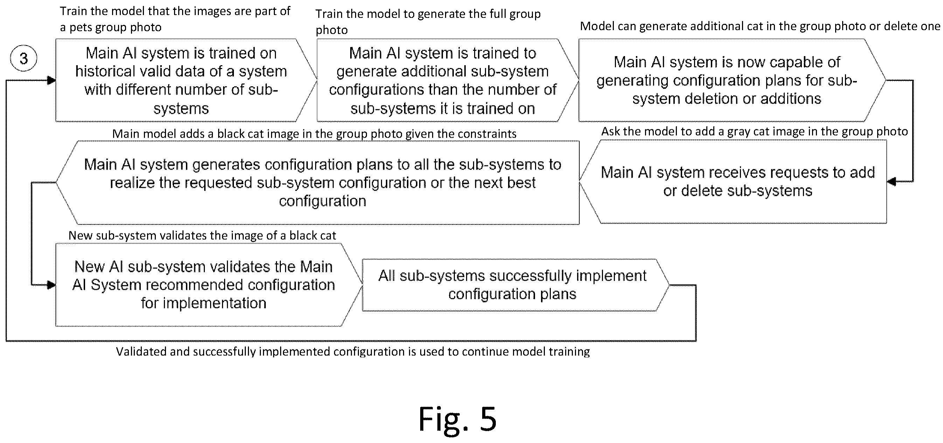

Similarly, Fig. 5 illustrates an example procedure for handling the requests for configuration change as illustrated in Fig. 4. This process is for illustrative purpose only, and a parallel is drawn to conventional image generation for better understanding of each step, similar to the above description of Fig. 3. Because the explanation of Fig. 3 mutually applies to Fig. 5, a repetition is omitted.

### Training

Now training of a machine learning model for the present invention is explained. Herein the procedure for training any one of the machine learning models disclosed herein mutually applies to the other machine learning models mentioned in this disclosure. That is to say, even if a specific machine learning model is referred to in this section, the training according to the present invention is not limited thereto. Instead, the training for any one machine learning model mutually applies to e.g.:
- the (system base) machine learning model for the satellite communication system (e.g., making use of (predetermined/historic) system configuration data for training);
- the (system evolved) machine learning model for the satellite communication system (e.g., making use of (generated) system configuration data for training);
- the (entity base) machine learning model for a communication entity (e.g., making use of (predetermined/historic) entity configuration data for training); and
- the (evolved entity) machine learning model for the communication entity (e.g., making use of (generated) entity configuration data).

As mentioned above, Fig. 7 illustrates an example of current system configuration data 10 as an image card and Fig. 8 illustrates an example of a current entity configuration data as an image card. However, the present invention is not limited thereto, and a matrix, array or other data collection/structure may be used to represent the current system configuration data 10. For simplicity and better understanding of the present invention, in the following explanation, reference is again predominantly made to an image card when explaining how the machine learning model is trained. The image card may also be referred to as a digital twin.

As illustrated in Fig. 8, parameters of the communication entity represented by the image card may be at least one of:
- ID (1, ..., n);
- satellite access capabilities (SAC) such as medium earth orbit (MEO), geostationary earth orbit (GEO), low earth orbit (LEO) or a range thereof;
- terminal parameters (TP) such as number of antennas, antenna group access capabilities, number of modems, software-defined wide area network (SD-WAN or not, satellite handover settings;
- SD-WAN parameters such as before modem or after, quality of experience (QoE) capabilities, quality of service (QoS) capabilities, security capabilities, stream/s throughput demand, deep packet inspection (DPI) or not, burst mode trigger status;
- modem parameters such as location, QoE/QoS capabilities, security capabilities, current throughput, next instance throughput demand, codec capabilities, burst mode (trigger) status;
- subscription parameters such as minimum/maximum values for throughput, burstable throughput, subscriber data record (SDR), committed information rate (CIR), maximum information rate (MIR); and
- current throughput, next throughput must, next throughput desired, ramp delta request value, local time, current codec, current burst error rate (BER).

As illustrated in Fig. 7, the image card representing the current system configuration data 10 may be obtained similarly to obtaining the image card representing the current entity configuration data as described above.

In the image card illustrated in Fig. 7, all or a subset of the pixelated parameters of the image card representing the current entity configuration data may be mapped to (i.e., mutually applied to) the image card representing the current system configuration data 10 as illustrated in Fig. 8. Thereby, a logical link between the image cards may be established reducing the variability when training with and generating subsequent image cards. For example, for training the base machine learning model 30 based on a full system, all pixelated parameters may be mapped. To reduce the computational load a selection or subset of pixelated parameters may be mapped. The latter option may be used if the change to the satellite communication system is a normal, anticipated or planned event e.g., of reduced, limited or foreseeable impact on the satellite communication system as a whole.

The base machine learning model 30 may be trained (or configured) to generate a generated system image card as generated system configuration data, based on a current system image card representing the current system configuration data, wherein as the system configuration placeholder, at least one pixel may be marked as changeable (or mutable) and the remaining pixels are marked as fixed (or immutable) or vice versa. Similarly, a base entity machine learning model may be trained (or configured) to generate a generated entity image card as generated entity configuration data, based on a current entity image card representing the current entity configuration data, wherein as the entity configuration placeholder, at least one pixel may be marked as changeable (or mutable) and the remaining pixels are marked as fixed (or immutable) or vice versa. That is to say, the trained machine learning model may generate an image card, wherein the marked pixels are filled in with pixel colors (or shades) taking into account the unchangeable pixel colors (or shades) of the image card. Thereby, a subsequent image card indicating the next parameters for handling the change to the satellite communication system can be generated.

As indicated above, training data may be obtained based on predetermined system configuration data and/or historic system configuration data.

For training the base machine learning model 30 using predetermined system configuration data, values for each parameter to be pixelated may be chosen based on information obtainable from a manufacturer (e.g. from a manual) of the communication entities. Thereby, a realistically and conceivably working configuration (i.e., in compliance with the system/entity constraints set) may be obtained.

For training the base machine learning model 30 using the historic system configuration data, values for each parameter to be pixelated may be obtained by querying a database storing a history of previously used system configurations. Herein, system configurations not meeting previous user requirements may be omitted. The thus obtained training data may be used to train the base machine model 30. For example, for an untrained machine learning model, only a subset of the pixelated values may be provided as training/input pixels and during training, weights of the untrained machine learning model may be modified with the aim of reproducing/outputting/generating values according to the remaining pixelated values as target/outputs pixels. By feeding back the difference (or error) between the pixel values outputted by the untrained (or not fully trained) machine learning model and the target pixel values using a well-known mechanism such as back-propagation, the untrained machine learning model may be
trained/optimized/tuned. Once this error reaches or falls below a predetermined threshold, the training is deemed to be completed and a base machine learning model 30 has been produced.

As mentioned above, the choice of which pixels may be used as input and which pixels may be used as output may be arbitrary. However, pixels typically representing parameters according to user requirements such as a desired throughput, a desired frequency/frequency band, a desired number of terminals etc. may be chosen as inputs and pixels typically representing parameters that remain configurable e.g., ID, encoding scheme, modem settings, etc. may be chosen as outputs.

The resultant base machine learning model 30 may comprise two instances/types/kinds of machine learning model: a system base machine learning model trained on training data regarding the satellite communication system as a whole, and an entity base machine learning model trained on training data regarding a communication entity. The former (system) base machine learning model may be the (main) AI system mentioned above and may be used to generate a generated system configuration data 50 for the satellite communication system as a whole. The latter (entity) base machine learning model may be the AI sub-system mentioned above and may be used to generate a generated entity configuration data for the corresponding communication entity of the satellite communication system. These two instances/types/kinds may be used collectively or individually and either way of use may be referred to as using the base machine learning model 30 for generating the generated system configuration data.

Alternatively, the base machine learning model 30 may be a single machine learning model trained based on both entity configuration data and system configuration data.

In addition to the above, the training process may also take into account the system constraint data 20 to make sure that the output produced by the base machine learning model 30 is in compliance with the operation requirements of the satellite communication system. For example, a proximity to an edge of a range determined by the set of system constraints may be used as an additional error during training the base machine learning model 30.

Herein, at least one of the base machine learning model 30 (and the evolved machine learning model which is explained later) may be a machine learning model for image generation. Herein, the machine learning model for image generation may be at least one of a neural network, a deep neural network, a generative adversarial network, a variational autoencoder, and a diffusion model.

### Generating

The base machine learning model 30 trained based on the training data may be used to generate the generated system configuration data.

Herein, the base machine learning model 30 may be provided with an incomplete or sparse image card, or an image card wherein pixels are marked as changeable (mutable), such that the base machine learning model 30 may fill in the remaining/marked pixels. Thereby, the filled in image card e.g. as illustrated in Fig. 7, may represent a possible configuration of a corresponding communication entity of the satellite communication system, and the filled in image card, e.g. as illustrated in Fig. 8, may represent a possible configuration of the satellite communication system as a whole. Because the process of filling in said pixels may be performed using highly parallelized machine learning hardware, a possible configuration can be obtained quickly.

In the example of Fig. 7 and 8, a system/entity configuration placeholder is illustrated as crosses "×" on top of some of the pixels, indicating that the values for these pixels need to be generated by the base machine learning model 30. This generation may be due to a change as mentioned above or may be to try to obtain more optimized parameters.

In the former case, some parameters may change requiring some other parameters (i.e., corresponding to the pixels marked with a cross "×") to also change. For example, if a user requests higher throughput, modem configurations, the number of communication entities designated for serving the user etc. may need to be updated.

In the latter case, a routine system optimization may be triggered to update parameters for configuring the satellite communication system in a more efficient way. For example, the currently configured system may consume more power than necessary to meet the user requirements, and a less power-intensive encoding mechanism may be chosen instead.

Although the examples of Fig. 7 and 8 illustrate that the number of communication entities remains the same since the number of pixels does not change, the present invention is not limited thereto. Instead, in case further configuration of a communication entity becomes possible, or in case a further communication entity is added to the satellite communication system, pixels regarding current and/or additional configurations may need updating. Herein, the size of the image cards may change by adding one or more rows and/or one or more columns, and/or one or more unused pixels to the right of the image cards may be used for generating the generated system configuration data 50.

Further, the placeholder may regard one or more current and/or one or more additional parameters and/or one or more unused pixels.

As a result, for example, if a communication entity (e.g., a terminal X) requests a configuration change to increase its throughput to 100 Mbps from its previously provisioned at throughput of 50 Mbps, the request may be validated by the base machine model (e.g., the AI sub-system corresponding to the terminal X) to validate that the communication entity is actually capable of 100 Mbps given that the (system/entity) constraints (e.g., the subscription limit, health of terminal, performance capabilities of the terminal). For example, given some (system/entity) constraints, the AI sub-system may only generate a configuration for 95 Mbps. In this case, a request may be sent to the (main) AI system for provisioning 95Mbps and not for providing 100 Mbps. The (main) AI system may generate a configuration for satellite communication system (including the constituting communication entities such as the satellites, gateways, etc.) to accommodate the requested throughput of 95 Mbps.

If the (main) AI system can only realize e.g., 90 Mbps, then the AI sub-system of the originally requesting communication entity (i.e., the terminal X) needs to validate if it can support the requirements and/or configuration of the communication entity when implementing 90 Mbps or not, given the constraints of the communication entity.

As a result, despite each AI sub-system individually generating its valid configuration in response to the request for configuration change (e.g., of 95 Mbps rather than 100 Mbps), it may do so as a standalone entity. Put differently, knowing that each AI sub-system may support the request of configuration change successfully, may not automatically mean that the satellite communication system has a whole may support the configuration change. For this reason, (main) AI system may validate that the request for configuration change can be implemented by the satellite communication system, and if not, what the next best configuration is. After all, the (main) AI system may have been trained on valid system configuration data that corresponds to simultaneous harmonious working of all communication entities with interdependencies that exist within the satellite communication system. Each of the AI sub-systems however may have been trained on valid configuration data pertaining to one communication entity.

### Validation of Compliance

The compliance with the system constraint data 20 may assured by training the base machine learning model 30 as outlined above. To assure that e.g., during training, the base machine learning model 30 generates outputs in compliance with the system constraint data 20, a system (or entity) simulation may be used. Alternatively or additionally, the system (or entity) simulation may be used alongside or with the base machine learning model 30 e.g., in case the generation parameters of the base machine model 30 are set to allow generation of non-compliant outputs.

In either of said cases, the method described above may further comprise operating a system simulation for simulating a system operation of the satellite communication system, wherein the compliance with the system constraint data 20 may be validated by using the system simulation.

The system simulation (and similarly, the entity simulation which is described below) may be a software, hardware or combination of the two, capable of representing at least some of the operation/s of the satellite communication system. Operating a system simulation may mean running a simulated model or replica of the (actual) satellite communication system on a computer or other processing device. The system simulation is designed to mimic the behavior and performance of the real satellite communication system under various conditions. For example, the system simulation may be a digital twin of the satellite communication system.

Herein, the system simulation is for simulating a system operation i.e., the purpose of the system simulation is to test or evaluate how the satellite communication system operates, including its interactions, processes, and responses to different scenarios.

The system simulation may be configured to comprise a plurality of sub-systems or parts of the plurality of sub-systems relevant for the operation of the satellite communication system. Herein, relevance may pertain to aspects of the plurality of sub-systems impacting the satellite communication system as a whole. For example, aspects of a communication entity (being an example of such a sub-system) of relevance to the satellite communication system as a whole may be at least one of data throughput, beam configuration, remaining operation duration/life, connectable devices, etc.

As a result, the system simulation may represent the operation of the satellite communication system, featuring at least some of the configuration parameters available for at least some of the sub-systems (e.g., communication entities).

Compliance with the system constraint data 20 may be validated by ensuring that the simulated satellite communication system operation adheres to certain rules, limits, or requirements defined by the system constraint data 20. The expression "validated" may indicate that the system simulation is used to check whether the system operation meets these constraints.

By using the system simulation, validation of compliance with the system constraint data 20 may be performed within the context of the system simulation. In other words, the simulation provides a controlled environment where the satellite communication system's behavior can be tested against the defined constraints.

In summary, this step may involve running a simulated model of the satellite communication system to test its operation and validate whether it complies with predefined constraints (system constraint data 20). The goal is to ensure that the system operates within acceptable limits and behaves as expected under various conditions.

Herein, the base (or evolved) machine learning model may be an instance of the system simulation. This may be achieved by training the machine learning model with the system constraint data 20 and/or by providing the system constraint data 20 to the machine learning model. Thereby outputs compliant with the system constraint data 20 may be produced. As a result, the outputs are validated to comply with the system constraint data 20.

With the system simulation, it may be predicted:
- How much data can be transmitted successfully?
- What is the expected signal-to-noise ratio at a terminal?
- How does the base station's transmission power affect the network's overall performance?

The simulation results may then be used to optimize performance of the satellite communication system, troubleshoot issues, or make informed decisions about network configuration and resource allocation. Some possible types of simulations that might be operated include:
- Discrete-event simulations, that are modeling the behavior of sub-systems as a series of discrete events, like packet transmissions or protocol interactions;
- Continuous-time simulations, that are modeling the behavior of entities over time, using differential equations or other mathematical models; and
- Hybrid simulations, that are combining different simulation approaches to model complex entity behaviors.

By operating a system simulation, valuable insights into the behavior of the satellite communication system can be gained, taking into account configuration of individual communication entities.

Herein, the compliance with the system constraint data 20 may be validated by confirming, with the system simulation, that the system operation of the satellite communication system is possible while adhering to the system constraints set.

As mentioned earlier, "compliance" may refer to ensuring that the satellite communication system operation meets certain rules, limits, or requirements defined by the system constraint data 20, and "validated" may indicate that the method involves checking or verifying whether the system operation satisfies these constraints.

The confirming may mean that the validation process involves obtaining confirmation or assurance that the system operation is indeed compliant with the constraints e.g., when applying the generated system configurations data. In other words, the method aims to provide a positive affirmation that the system operation meets the required standards and technical limitations once a system configuration has been applied.

The confirmation may be obtained through the use of the system simulation. The simulation may serve as a tool to test and evaluate the system operation under various conditions, allowing for the validation of compliance with the constraints.

Checking that the system operation of the satellite communication system is possible may mean that the validation process checks whether it is feasible, technically possible or practicable to operate the satellite communication system in a way that meets the (technical) constraints applicable to the system. In other words, the method verifies that the system can function as intended while adhering to the defined limits. Herein, adherence may mean that the validation process checks whether the system operation complies with the specific constraints defined in the system constraint data 20.

In essence, the system simulation may be used to confirm that it is possible to operate the satellite communication system in a way that satisfies the predefined system constraints set i.e., system constraint data 20. The goal is to ensure that the system can function as intended while staying within the established limits, thereby validating its compliance with the required standards.

For illustration only, consider the following example. Suppose the system constraint data 20 defines a maximum allowable transmission power and a required available data throughput for the satellite communication system. The system simulation might be used to test whether generated system configuration parameters (i.e., generated for achieving the required available data, possibly featuring different transmission modes or antenna configurations), to confirm that the satellite communication system can operate within the defined power limit. If the system simulation shows that the system can transmit data as required while staying within the maximum allowable power constraint, then compliance with the constraint is validated.

The method may further comprise obtaining entity constraint data indicating at least one constraint of one of the plurality of communication entities, the at least one constraint of the one of the plurality of communication entities being hereon referred to as "entity constraints set".

Obtaining entity constraint data may be similar to obtaining the system constraint data 20 and the description thereto may mutually apply. In summary, the obtaining may involve acquiring or retrieving data related to at least one constraint associated with one or more communication entities. As mentioned above, the term communication entity may refer to a sub-system, component or element within the satellite communication system, such as a satellite, a ground station, a gateway, a configurable network equipment or a user terminal.

The entity constraint data may provide information as at least one constraint about one or more limitations, constraints or restrictions imposed on at least one communication entity. A constraint may be a technical requirement, a performance metric, or an operational limit, such as a maximum transmission power, a minimum signal-to-noise ratio, a specific communication protocol, etc.

The at least one constraint being of one of the plurality of communication entities may mean that the entity constraint data pertains to only or at least one of the multiple communication entities within the satellite communication system. The term "plurality" may mean that there are several entities, and the method focuses on just one of them, but the satellite communication system is not limited to any specific number or types of communication entities.

The new term, "entity constraints set", may refer to the collection of constraints associated with the specific entity or entities being considered.

In summary, this method step relates to obtaining of data that defines one or more constraints for at least one communication entity within the satellite communication system. These constraints are collectively referred to as the "entity constraints set".

For illustrative purpose only, consider the following example. Suppose the satellite communication system consists of multiple satellites (Satellite A, Satellite B, and Satellite C), each with its own set of constraints. Herein, Satellites A, B and C may have individual constraints such as:
- Satellite A has a maximum transmission power of watts and a minimum elevation angle of 30 degrees;
- Satellite B has a maximum transmission power of 50 watts and a minimum signal-to-noise ratio (SNR) of 10 dB; and
- Satellite C has a maximum transmission power of 200 watts and a minimum data rate of 1Mbps.

In this case, the "entity constraints set" for Satellites A, B and C would include two constraints of each satellite, and the obtained entity constraint data may include at least one of these two constraints. By obtaining and analyzing the entity constraint data in such a way, the method may take into account the unique limitations, technical constraints and requirements of each individual communication entity, ensuring that the overall system operates efficiently and effectively.

The method may further comprise operating an entity simulation for simulating an entity operation of the one of the plurality of communication entities.

Operating an entity simulation is similar to operating the system simulation, and the disclosure thereof mutually applies. It may involve running or executing a simulation related to a communication entity. The difference compared to the system simulation is that the entity simulation is for simulating an entity operation such as the operation of a communication entity. This may mean that the purpose of the entity simulation is to mimic or model the behavior of a specific communication entity as it performs one or more operations. By simulating the entity operation a computational model or representation such as a digital twin may be used to replicate the communication entity's behavior, rather than actually performing the operation itself i.e., in situ.

The entity simulation may be focused on a single communication entity (rather than a group or a collection (plurality) of simulation entities), which is part of a larger group or collection (plurality) of communication entities. In other words, the method may be simulating the behavior of a specific entity within a set of multiple entities.

In summary, a simulation may be run to model the behavior of a specific communication entity as it performs one or more operations based on one or more certain entity configurations. The simulation may be used to predict how the entity will behave under various conditions, test hypotheses, or optimize system performance.

For illustrative purpose only, consider the following example. Suppose a satellite communication system comprises a plurality of communication entities, such as base stations, terminals (or mobile devices), and gateways (or routers). Each communication entity has its own set of operations, like transmitting data, receiving signals, or routing packets and should do so based on entity configurations applied thereto. The entity simulation may be operated to model the behavior of a specific base station, say "Base Station A", as it transmits data to a terminal, say "Terminal A". As a result, the entity simulation may take into account various factors, such as:
- the base station's transmission power and antenna configuration;
- the terminal's location and reception characteristics;
- the channel conditions, like fading, interference, or noise; and/or
- the network protocols and algorithms used for data transmission.

By running the entity simulation in such a way, it can be predicted how Base Station A will behave in a scenario based on entity configurations applied to said communication entity.

Herein the compliance with the system constraint data 20 may be validated by using the entity simulation.

This validation may refer to the process of checking whether the behavior or operation of the communication entity adheres to a set of constraints defined by the system constraint data 20. Herein, compliance may mean that the method is verifying whether the communication entity is meeting certain requirements, rules, or limitations imposed by the system i.e., the system constraint data 20, and "validated" may mean that the method is seeking to confirm or verify the correctness of the compliance check.

Rather than using the system simulation providing an overall system compliance check, by using the entity simulation the entity simulation may be utilized to perform the compliance validation. In other words, the simulation results may be used to check whether the communication entity's behavior aligns with the system constraints.

By differentiating between a system simulation and an entity simulation in this regard it is not necessary to produce a complete and comprehensive simulation taking into account each configuration parameter of every communication entity. Instead, by focusing the simulations on configuration parameters relevant for validating compliance of the satellite communication and on configuration parameters relevant for validating compliance of the communication entity, the number and scope of the simulation can be reduced without losing focus. As a result, computational load to validate compliance of both the system, as well as a communication entity can be reduced. After all, the choice of configuration parameters on which the focus should be put, may be based on which configuration parameters have been or will be modified by the change affecting the satellite communication system.

In summary, the entity simulation may be leveraged to validate whether the communication entity's operation complies with the system constraints defined in the system constraint data 20.

Herein, the base (or evolved) machine learning model may be or may be part of the entity simulation. Specifically, when training the machine learning model as described above, a subsequent step to each training step may be a validation of compliance with the system (or entity) constraint data 20. Feeding back (e.g., using backwards propagation as described above) the non-compliance as an additional error, makes sure the training results in a base (or evolved) machine learning model 30 capable of generating generated system configuration data 50 being in compliance with the system (or entity) constraint data 20. A thus obtained base (or evolved) machine learning system, may be said to contain knowledge regarding compliance verification, and may therefore generate generated system configuration data 50 in compliance with the system constraint data 20. In this case it may not be necessary to validate compliance with the system (or entity) simulation. Thereby, it is possible to reduce the amount of computation for generating the generated system configuration data 50 in response to the change affecting the satellite communication system.

Herein, the compliance with the system constraint data 20 may be validated by confirming, with the entity simulation, that the entity operation is possible while adhering to the entity constraints set.

Further the system simulation may comprise a plurality of simulation entities, wherein each of the plurality of simulation entities may be configured to simulate at least one or at least one part of one communication entity of the plurality of communication entities of the satellite communication system.

The system simulation as described above may comprise a plurality of simulation entities, which may mean that the system simulation is composed of multiple (i.e., a plurality of) individual simulation entities, which are used to model specific aspects or components of the satellite communication system. The term "plurality" may mean that there are at least two or more simulation entities, but the system simulation is not limited thereto.

Each simulation entity being configured to simulate may mean that each simulation entity can be set up or programmed to mimic the behavior of specific sub-system, communication entity, components or aspects of the satellite communication system. With the clarification of at least one or at least one part of one communication entity, each simulation entity may model at least one of:
- at least one entire communication entity (e.g., a satellite, a ground station, a gateway, or a terminal) within the satellite communication system; and
- at least one part of a communication entity (e.g., a transponder, an antenna, a battery, or a receiver).

The choice of what is to be simulated may be based on the imposed constraints and/or may be based on which configuration parameters have been modified or will be modified due to the change impacting the satellite communication system.

In summary, the system simulation may consist of multiple simulation entities, each of which can be configured to model specific parts or entire communication entities within the satellite communication system.

By using these simulation entities, the system simulation can:
- Model complex interactions: Simulate the interactions and relationships between different components and entities within the satellite communication system;
- Evaluate system performance: Assess the overall performance of the satellite communication system under various conditions and scenarios; and
- Optimize system design: Use the simulation results to identify areas for improvement and optimize the design of the satellite communication system.

Herein each of the simulation entities may be configured to communicate with at least one other of the plurality of simulation entities, preferably using a direct communication.

That is to say, each simulation entity can be set up or programmed to exchange information or interact with other simulation entities, and each simulation entity can communicate with at least one, but potentially multiple, other simulation entities within the entity simulation.

The communication between simulation entities may be direct, meaning that it does not involve intermediate entities or message routing. In other words, the simulation entities may be able to exchange information directly with each other, without relying on additional components or infrastructure. As a result, simulation entities may be assumed to communicate directly with other simulation entities, allowing them to exchange information and interact with each other in a straightforward and efficient manner, whereby the system simulation can be reduced in complexity. Such a direct communication between simulation entities allows for efficient and realistic modeling of the satellite communication network. Some (further) benefits of direct communication between simulation entities may include:
- Improved accuracy: Direct communication allows for more accurate modeling of the system's behavior, as it eliminates potential errors or distortions introduced by simulating intermediate components.
- Increased efficiency: Direct communication reduces the complexity and overhead associated with indirect communication methods, making the simulation faster and more efficient.
- Enhanced realism: Direct communication enables more realistic modeling of the system's interactions and relationships, which is essential for predicting its behavior under various scenarios.

However, the compliance with the system constraint data using the system simulation may be validated such that at least one of the plurality of simulation entities is configured not to communicate with each other.

By limiting the communication capabilities in this regard, during the validation process, at least one of the simulation entities may (intentionally) be prevented from communicating with other simulation entities. Thereby, the system simulation may be used to test compliance with the system constraint data 20 by isolating or disconnecting at least one simulation entity from the others. This allows for evaluating how the simulated system behaves when certain components or interactions are disabled or constrained.

For illustrative purpose only, consider the following example. Given a system simulation that models a satellite communication system consisting of three satellites (Sat1, Sat2, and Sat3), two ground stations (GS1 and GS2), and multiple terminals. Each satellite is represented by a separate simulation entity (SE1, SE2, and SE3), and each ground station is also represented by a separate simulation entity (SE4 and SE5). In this example, the system constraint data 20 specifies that Sat1 (SE1), Sat2 (SE2) and Sat3 (SE3) have a maximum data throughput of 10 Mbps each. When applying the generated system configuration data 50 to the system simulation, the satellite communication system may be simulated such that the satellites (i.e., SE1 to SE3) do not communicate with each other. Otherwise, even if the applied generated system configuration data 50 may allow each satellite to communicate with its maximum data throughput which should result in a total data throughput (i.e., up-/downlink capacity) of 30 Mbps, the system simulation may take into account inter-satellite communication and return a total data throughput below 30 Mbps. Therefore, the system simulation may be limited to prevent satellites from communicating with each other, but may allow communication between satellites and gateways and between satellites and terminals.

Further, when using the base (or evolved) machine learning system as the system (or entity) simulation, communication as a whole may not be taken into account. In this example, to validate compliance with this constraint, the system simulation is configured such that none of the simulation entities (SE1 to SE5) communicate with each other. Thereby, emphasis may be put only on whether the configuration parameters (indicated by the image cards discussed above) comply with the system constrain data 20.

Some benefits of this validation approach include:
- Improved fault tolerance: By testing how the system behaves when certain components or interactions are disabled, the simulation can help identify potential single points of failure and improve the overall fault tolerance of the system.
- Enhanced constraint validation: This approach enables more comprehensive validation of system constraints, ensuring that the simulated system adheres to specific rules and limitations even in the presence of component failures or disconnections.
- Increased confidence in system behavior: By evaluating how the system behaves under various scenarios, including isolated components, the simulation can increase confidence in the system's ability to operate within defined constraints and meet performance requirements.

The constraints of the satellite communication system and/or of each communication entity may be set according to the requirements and technical limitations of the satellite communication system and/or of each communication entity. For example, at least one of the system constraints set and the entity constraints set may be obtained based on at least one of the current system configuration data, the predetermined system configuration data, the historic system configuration data, and predetermined constraint data.

### Evolving

The (system/entity) base machine learning model used for generating the generated system configuration data 50 may be a static, non-changing or immutable machine learning model, but the present invention is not limited thereto. Instead, the present embodiment may further comprise obtaining an evolved machine learning model based on the base machine learning model 30 by modifying weights of the base machine learning model.

Herein, the base machine learning model may be referred to as a pre-trained base model, such as a neural network, that has initial weights learned during training. To evolve this base machine learning model, evolutionary techniques may be applied such as:
- Mutation: Introduce random changes to the base model's weights to create variations or mutants.
- Crossover: Combine weights from different models to generate new offspring models, exploring diverse parameter spaces.

Further, the present embodiment may comprise generating, with the evolved machine learning model, based on the current system configuration data with the applied system configuration placeholder, an evolved system configuration data comprising at least one evolved configuration parameter regarding the satellite communication system and indicating a subsequent configuration of the satellite communication system for handling the change in compliance with the system constraint data.

Herein, the evolved system configuration data may be, may be similar to, or may have similar properties as the generated system configuration data 50. However, because the evolved system generation data is generated by the evolved machine learning model, it may be different to the generated system configuration data. This difference may result in an improved configuration of the satellite communication system. For example, when applying the thus generated subsequent configuration to the system simulation of the satellite communication system, it may be determined that the total power consumption is reduced despite complying with the system constraints set.

This is to say, a performance of the satellite communication system may be determined based on the evolved system configuration data, and (optionally) the evolved system configuration data may be outputted based on the determined performance. For example, if the improvement in total power consumption can be neglected, the downside of interrupting the service for reconfiguring the whole or at least part of the satellite communication system may outweigh the gains obtained by applying the evolved system configuration data. Also, some communication entities may not be designed to reconfigure frequently. Therefore applying the evolved system configuration data when it is capable of achieving a benefit outweighing the cost of reconfiguring the communication entity makes sure that the lifetime of the entity is maximized.

In this regard, the performance of the satellite communication system may relate to at least one of:
- a closeness of the at least one evolved configuration parameter to the system constraints set,
- a maximum possible throughput of the satellite communication system determined by applying the evolved system configuration data to the system simulation,
- an estimated system energy/power consumption of the satellite communication system determined by applying the evolved system configuration data to the system simulation, and
- an estimated entity energy/power consumption of at least one of the plurality of communication entities determined by applying the evolved system configuration data to the entity simulation.

For illustrative purpose only, consider the following example. If the generated system configuration data 50 were applied to the satellite communication system, it would (e.g., according to the system simulation) be consuming X watts of power for a total data throughput of Y Mbps with Z redundant elements. Applying the evolved system configuration data may change the performance of the satellite communication system e.g., to be consuming X+Δx watts of power for a total data throughput of Y+Δy Mbps with Z+Δz redundant elements. If the changed power consumption of X+Δx watts is increased and thus brought closer to an upper limit (e.g., assuming Δy=0 and Δz=0), then this would qualify as a worsening of the performance (and vice versa). If the changed total data throughput of Y+Δy Mbps is increased and thus brought further away from a lower limit (e.g., assuming Δx=0 and Δz=0), then this would qualify as an improvement of the performance (and vice versa). If the redundant elements change and their number/count departs from i.e., their number/count becomes greater or smaller than the required number/count of redundant elements, this may (always) qualify as a worsening in performance.

As a result there is a clear measure for determining whether the outputs generated by the evolved machine learning model are improved with regard to the generated system configuration data 50.

The evolved machine learning model may be evolved further in accordance with the description above. For example, if the compliance with the system constraint data 20 is validated, weights of the evolved machine learning model may be modified, and with this evolved machine learning model (i.e., featuring modified weights), based on the current system configuration data 20 with the applied system configuration placeholder, the evolved system configuration data may be generated. That is to say, if the evolved machine learning model generates evolved system configuration data compliant with the system constraints set, the evolved machine learning model may be treated as or may take the place of the base machine learning model 30 for generating the generated system configuration data 50 that is to be applied to the satellite communication system. Herein, this substitution of the base machine learning model 30 may be dependent on the performance (gains) obtained by using the evolved machine learning model.

As a result, the base machine learning model 30 may be evolved or improved, resulting in an improved utilization of the communication entities of the satellite communication network.

However, if the compliance with the system constraint data 20 is not validated, the weights of the evolved machine learning model may be reset based on at least one of:
- the weights of the base machine learning model, and
- the weights of the evolved machine learning model before modifying the weights of the evolved machine learning model.

Fig. 11 illustrates an example of training an evolved machine learning model while taking into account the possibility of over-training, hallucinations and generating biased data. Specifically, and as explained above, the (system/entity base) machine learning model may be trained based on predetermined/historic configuration data, and this machine learning model may be further optimized/trained/evolved e.g., using validated (i.e., compliant) outputs that may be fed back as illustrated in Figs. 3 and 5. After all, the configurations generated by the (not yet evolved) machine learning model may be stored every time valid and compliant outputs are generated, and the stored configurations may be used as additional training data with a training procedure e.g., as outlined above.

When modifying the weights of the machine learning model to evolve, test configurations may be generated to determine whether they are valid and/or compliant. Whenever the thus evolved machine learning model starts to generate configurations that are not valid and/or compliant e.g., that override constraints (e.g., specifying more gateways than available) or result in parameter values incompatible with the corresponding communication entity (e.g., specifying an unsupported throughput) the thus generated configurations cannot be implemented. In this case, the configuration settings (e.g., weights) of the machine learning model may be returned to those of the last known properly working machine learning model. This last known properly working machine learning model may be a base machine learning model or a (previous) evolved machine learning model.

Further, if the evolving of the machine learning model continues for multiple iterations before generating test configurations, the evolved machine learning model may be rolled back, reverted or returned to a previous iteration and the configurations generated by this rolled back, reverted or returned to previous iteration of evolved machine learning model may be tested similarly. Once the test configurations start being valid and/or compliant, the evolving may start again.

Thereby, in case the evolved machine learning model begins to "hallucinate" and produce outputs that would not comply with the system constraint data 20, a further evolving can be suppressed. Thereby, it can be assured that the base (or evolved) machine learning model 30 used to generate the generated (or evolved) system configuration data 50 (to be applied to the satellite communication system in response to the change thereto) generates outputs compliant with the system constraint data 20.

### Communication Entity

A description has been provided mostly regarding the satellite communication system as a whole. However, the disclosure thereto may be mutually applied with regard to at least one communication entity; hereon referred to as the one communication entity.

Herein, the base machine learning model may be trained based on predetermined and/or historic entity configuration data regarding the one communication entity (i.e., similar to the predetermined and/or historic system configuration data), to produce generated entity configuration data to be applied to the one communication entity (i.e., similar to obtaining the generated system configuration data 50).

Herein, current entity configuration data regarding the one communication entity (i.e., similar to the current system configuration data 10) may be obtained, and entity constraint data regarding the one communication entity (i.e., similar to the system constraint data 20) may be obtained.

Herein, based on a change affecting the one communication entity, an entity configuration placeholder (i.e., similar to the system configuration placeholder; see e.g., Fig. 8B) may be applied to the current entity configuration data.

Herein, with the base machine learning model (trained for generating configuration data for the one communication entity) and based on the current entity configuration data with the applied entity configuration placeholder, a generated entity configuration data (i.e., similar to the generated system configuration data 50) may be generated.

Herein the generated entity configuration data may comprise at least one generated configuration parameter regarding the one communication entity and may indicate a subsequent configuration of the one communication entity for handling the change in compliance with the entity constraint data.

The remaining disclosure regarding the satellite communication system mutually applies to the above disclosure regarding the one communication entity. Although the term "one communication entity" has been used above, the present invention is not limited to exactly one communication entity. Instead, the above disclosure may be applied to a plurality of communication entities, possibly individually.

### Conclusion

In conclusion, the disclosed methods can be combined, modified, or adapted in various ways while remaining within the spirit and scope of the present invention as defined by the enclosed set of claims. Herein, the disclosure regarding the system simulation may mutually apply to the entity simulation.

For example, a disclosure that data is stored in a specific location, a disclosure that processing is performed by a specific unit, or a disclosure that data is inputted or outputted by a specific interface is only an example and the present invention is not limited thereto.

Similarly, a disclosure and/or technical teaching regarding a system component or system data mutually applies to the sub-system/entity component or sub-system/entity data and vice versa. For example, if an aspect of the training, generation, simulation, or compliance validation has been described in detail only with regard to the satellite communication system (i.e., as a whole), it should be noted that this aspect mutually applies to the one or more communication entities of the satellite communication system.

Although parts of this description are under a certain section of a certain embodiment, the disclosure directed to this certain embodiment is mutually applicable to and combinable with any other embodiment disclosed herein.

That is to say, the disclosure pertaining to any embodiment disclosed herein is not limited to this embodiment and does not limit the scope of the present invention since it is defined by the enclosed set of claims.

Moreover, the person skilled in the art understands that this disclosure makes use of certain labels to distinguish among features relevant for understanding the present invention. However, these labels are to be understood as nonlimiting by themselves, and only within the context of their definition according to the claims.

## Claims

1. A method for a resource control system and assisting in handling of at least one change affecting a satellite communication system comprising a plurality of communication entities, the method comprising:
obtaining (S10) current system configuration data (10) comprising at least one current configuration parameter regarding the satellite communication system and indicating a current configuration of the satellite communication system;
obtaining (S20) system constraint data (20) indicating at least one constraint of the satellite communication system, the at least one constraint of the satellite communication system being hereon referred to as "system constraints set";
obtaining (S30) a base machine learning model (30) trained based on training data, the training data being based on at least one of:
predetermined system configuration data comprising at least one predetermined configuration parameter regarding the satellite communication system and indicating a predetermined configuration of the satellite communication system, and
historic system configuration data comprising at least one historic configuration parameter regarding the satellite communication system and indicating a historic configuration of the satellite communication system;
applying (S40), based on a change affecting the satellite communication system, a system configuration placeholder to the current system configuration data; and
generating (S50), with the base machine learning model (30), based on the current system configuration data (10, 40) with the applied system configuration placeholder, a generated system configuration data (50) comprising at least one generated configuration parameter regarding the satellite communication system and indicating a subsequent configuration of the satellite communication system for handling the change in compliance with the system constraint data (20).

2. A method for a resource control system and assisting in handling of at least one change affecting a satellite communication system comprising a plurality of communication entities, the method comprising:
obtaining (S10) current entity configuration data comprising at least one current configuration parameter regarding at least one of the plurality of communication entities and indicating a current configuration of the at least one communication entity;
obtaining (S20) entity constraint data (20) indicating at least one constraint of the at least one communication entity, the at least one constraint of the at least one communication entity being hereon referred to as "entity constraints set";
obtaining (S30) an entity base machine learning model (30) trained based on entity training data, the entity training data being based on at least one of:
predetermined entity configuration data comprising at least one predetermined configuration parameter regarding the at least one communication entity and indicating a predetermined configuration of the at least one communication entity, and
historic entity configuration data comprising at least one historic configuration parameter regarding the at least one communication entity and indicating a historic configuration of the at least one communication entity;
applying (S40), based on a change affecting the satellite communication system, an entity configuration placeholder to the current entity configuration data;
generating (S50), with the entity base machine learning model (30), based on the current entity configuration data (10, 40) with the applied entity configuration placeholder, a generated entity configuration data (50) comprising at least one generated configuration parameter regarding the at least one communication entity and indicating a subsequent configuration of the at least one communication entity for handling the change in compliance with the system constraint data (20);
obtaining (S10) current system configuration data (10) comprising at least one current configuration parameter regarding the satellite communication system and indicating a current configuration of the satellite communication system;
obtaining (S20) system constraint data (20) indicating at least one constraint of the satellite communication system, the at least one constraint of the satellite communication system being hereon referred to as "system constraints set";
obtaining (S30) a system base machine learning model (30) trained based on system training data, the system training data being based on at least one of:
predetermined system configuration data comprising at least one predetermined configuration parameter regarding the satellite communication system and indicating a predetermined configuration of the satellite communication system, and
historic system configuration data comprising at least one historic configuration parameter regarding the satellite communication system and indicating a historic configuration of the satellite communication system;
applying (S40), based on the change affecting the satellite communication system and on the generated entity configuration data, a system configuration placeholder to the current system configuration; and
generating (S50), with the system base machine learning model (30), based on the current system configuration data (10, 40) with the applied system configuration placeholder, a generated system configuration data (50) comprising at least one generated configuration parameter regarding the satellite communication system and indicating a subsequent configuration of the satellite communication system for handling the change in compliance with the system constraint data (20).

3. The method of claim 2, wherein the entity base machine learning model and the system base machine learning model are a base machine learning model trained based on the entity training data and the system training data.

4. The method of any of claims 1 to 3, further comprising:
operating a system simulation for simulating a system operation of the satellite communication system, wherein
the compliance with the system constraint data (20) is validated by using the system simulation.

5. The method of claim 4, wherein
the compliance with the system constraint data (20) is validated by confirming, with the system simulation, that the system operation of the satellite communication system is possible while adhering to the system constraints set.

6. The method of any of claims 1 to 5, further comprising:
obtaining entity constraint data indicating at least one constraint of one of the plurality of communication entities, the at least one constraint of the one of the plurality of communication entities being hereon referred to as "entity constraints set";
operating an entity simulation for simulating an entity operation of the one of the plurality of communication entities, wherein
the compliance with the system constraint data (20) is validated by using the entity simulation.

7. The method of claim 6, wherein
the compliance with the system constraint data (20) is validated by confirming, with the entity simulation, that the entity operation is possible while adhering to the entity constraints set.

8. The method of any of claims 4 to 7, wherein
the system simulation comprises a plurality of simulation entities,
each of the plurality of simulation entities is configured to simulate at least one or at least one part of one communication entity of the plurality of communication entities of the satellite communication system, and
each of the simulation entities is configured to communicate with at least one other of the plurality of simulation entities, preferably using a direct communication.

9. The method of claim 8, wherein
the compliance with the system constraint data using the system simulation is validated such that at least one of the plurality of simulation entities is configured not to communicate with each other.

10. The method of any of claims 1 to 9, wherein
at least one of the system constraints set and the entity constraints set is obtained based on at least one of the current system configuration data, the predetermined system configuration data, the historic system configuration data, and predetermined constraint data.

11. The method of any of claims 1 to 10, wherein
the current system configuration data indicates at least one of an identification, a type, a bandwidth, a throughput, an encoding scheme, a beam configuration, and a constraint regarding at least one of the plurality of communication entities.

12. The method of any of claims 1 to 11, wherein
the plurality of communication entities comprises at least one of a gateway, a satellite, a terminal and a communication link.

13. The method of any of claims 1 to 12, wherein
the current system configuration data is a set or an array comprising a plurality of current entries, each current entry regarding one current configuration parameter,
the generated system configuration data is a set or an array comprising a plurality of generated entries, each generated entry regarding one generated configuration parameter,
the system configuration placeholder is at least one further entry addable to current system configuration data, each further entry regarding one current configuration parameter or one generated configuration parameter and being an empty value, a predetermine value or a random value,
applying the system configuration placeholder comprises at least one of:
a) concatenating at least one of the plurality of entries of the current system configuration data and the at least one further entry of the system configuration placeholder, and
b) substituting at least one of the plurality of entries of the current system configuration data with the at least one further entry of the system configuration placeholder, and
generating the generated system configuration data comprises determining a value for the system configuration placeholder by applying to the base machine learning model the current system configuration data with the applied system configuration placeholder.

14. The method of any of claims 1 to 13, wherein
at least one of the current system configuration data (10) and the generated system configuration data (50) relates to a beam configuration, a gateway choice, a codec, a satellite choice, a bandwidth, a frequency, an encoding scheme, a decoding scheme and a communication protocol.

15. The method of any of claims 1 to 14, further comprising:
obtaining an evolved machine learning model based on the base machine learning model by modifying weights of the base machine learning model; and
generating, with the evolved machine learning model, based on the current system configuration data with the applied system configuration placeholder, an evolved system configuration data comprising at least one evolved configuration parameter regarding the satellite communication system and indicating a subsequent configuration of the satellite communication system for handling the change in compliance with the system constraint data.

16. The method of claim 15, further comprising:
determining a performance of the satellite communication system based on the evolved system configuration data; and
outputting the evolved system configuration data based on the determined performance.

17. The method of claim 16, wherein
the performance of the satellite communication system relates to at least one of
a closeness of the at least one evolved configuration parameter to the system constraints set,
a maximum possible throughput of the satellite communication system determined by applying the evolved system configuration data to the system simulation,
an estimated system energy consumption of the satellite communication system determined by applying the evolved system configuration data to the system simulation, and
an estimated entity energy consumption of at least one of the plurality of communication entities determined by applying the evolved system configuration data to the entity simulation.

18. The method of any of claims 15 to 17, further comprising:
if the compliance with the system constraint data is validated, modifying weights of the evolved machine learning model; and
re-generating, with the evolved machine learning model with modified weights, based on the current system configuration data with the applied system configuration placeholder, the evolved system configuration data.

19. The method of any of claims 15 to 18, further comprising:
if the compliance with the system constraint data is not validated, resetting the weights of the evolved machine learning model based on at least one of
the weights of the base machine learning model, and
the weights of the evolved machine learning model before modifying the weights of the evolved machine learning model.

20. The method of any of claims 1 to 19, wherein
at least one of the base machine learning model and the evolved machine learning model is a machine learning model for image generation.

21. The method of claim 20, wherein the machine learning model for image generation is at least one of a neural network, a deep neural network, a generative adversarial network, a variational autoencoder, and a diffusion model.

22. The method of any of claims 1 to 21, wherein the base machine learning model has been trained to generate the generated system configuration data 50 that is in compliance with the system constraint data 20.
